(19) Europäisches Patentamt
European Patent Office
Office européen des brevets

(11) **EP 4 788 042 A1**

(12) **EUROPEAN PATENT APPLICATION**
published in accordance with Art. 153(4) EPC

(43) Date of publication:
05.08.2026  Bulletin 2026/32

(21) Application number: 24870769.7

(22) Date of filing: 25.09.2024

(51) International Patent Classification (IPC):
*H04W 74/0833* (2024.01)  *H04W 74/0836* (2024.01)
*H04W 74/0838* (2024.01)  *H04W 12/037* (2021.01)

(52) Cooperative Patent Classification (CPC):
H04L 67/12; H04W 12/037; H04W 74/00;
H04W 74/0833; H04W 74/0836; H04W 74/0838

(86) International application number:
PCT/CN2024/121064

(87) International publication number:
WO 2025/067225 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023  CN 202311290603

(71) Applicant: Vivo Mobile Communication Co., Ltd.
Dongguan, Guangdong 523863 (CN)

(72) Inventor: LIU, Xuanbing
Dongguan, Guangdong 523863 (CN)

(74) Representative: Studio Torta S.p.A.
Via Viotti, 9
10121 Torino (IT)

(54) **TRANSMISSION METHOD AND APPARATUS, INTERNET OF THINGS DEVICE, AND ELECTRONIC DEVICE**

(57)    This application provides a transmission method and apparatus, an internet of things device, and an electronic device, and belongs to the field of communication technologies. The transmission method in embodiments of this application includes: A target internet of things device receives a first downlink message sent by a first device, where the first downlink message indicates at least one internet of things device to initiate a random access procedure. The first downlink message includes at least one of the following: identification information of the at least one internet of things device; a paging cause; access procedure information; data transmission information; access resource configuration information for the target internet of things device; time control information; retransmission resource configuration information for the target internet of things device; security information, where the security information is used to perform authentication on the target internet of things device, and encrypt or decrypt transmitted data; and a first indication, where the first indication indicates backoff time for data retransmission of the target internet of things device.

A target internet of things device receives a first downlink message sent by a first device, where the first downlink message indicates at least one internet of things device to initiate a random access procedure — 101

FIG. 12

EP 4 788 042 A1

**Description**

**CROSS-REFERENCE TO RELATED APPLICATIONS**

This application claims priority to Chinese Patent Application No. 202311290603.5, filed with the China National Intellectual Property Administration on September 28, 2023 and entitled "TRANSMISSION METHOD AND APPARATUS, INTERNET OF THINGS DEVICE, AND ELECTRONIC DEVICE", which is incorporated herein by reference in its entirety.

**TECHNICAL FIELD**

This application belongs to the field of communication technologies, and specifically relates to a transmission method and apparatus, an internet of things device, and an electronic device.

**BACKGROUND**

Ambient internet of things (Ambient IoT, A-IoT) is a new to-be-researched 3GPP internet of things technology. An A-IoT device is an ultra-low complexity and ultra-low power consumption terminal. 3GPP ambient IoT aims to provide large-scale cellular network deployment and seamless coverage. Currently, a signaling interaction process of the A-IoT device needs to be defined, to reduce a quantity of signaling interactions as much as possible.

**SUMMARY**

Embodiments of this application provide a transmission method and apparatus, an internet of things device, and an electronic device, to define a signaling interaction process of an A-IoT device, support more functions in signaling, and reduce a quantity of signaling interactions.

According to a first aspect, a transmission method is provided, including:
a target internet of things device receives a first downlink message sent by a first device, where the first downlink message indicates at least one internet of things device to initiate a random access procedure.

The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

According to a second aspect, another transmission method is provided, including:
a first device sends a first downlink message to a target internet of things device, where the first downlink message indicates at least one internet of things device to initiate a random access procedure.

The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

According to a third aspect, a transmission apparatus is provided. The apparatus is used in an internet of things device, and includes:
a first downlink message receiving module, configured to receive a first downlink message sent by a first device, where the first downlink message indicates at least one internet of things device to initiate a random access procedure.
The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

According to a fourth aspect, another transmission apparatus is provided. The apparatus is used in a first device, and includes:
a first downlink message sending module, configured to send a first downlink message to a target internet of things device, where the first downlink message indicates at least one internet of things device to initiate a random access procedure.
The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

According to a fifth aspect, an internet of things device is provided, including a processor and a memory. The memory stores a program or instructions runnable on the processor. When the program or the instructions are executed by the processor, the steps of the transmission method according to the first aspect are implemented.
According to a sixth aspect, an electronic device is provided, including a processor and a memory. The memory stores a program or instructions executable on the processor. When the program or the instructions are executed by the processor, the steps of the transmission method according to the second aspect are implemented.
According to a seventh aspect, a transmission system is provided, including an internet of things device and a first device. The internet of things device may be configured to perform the steps of the transmission method according to the first aspect. The first device may be configured to perform the steps of the transmission method according to the second aspect.

According to an eighth aspect, a readable storage medium is provided. The readable storage medium stores a program or instructions. When the program or the instructions are executed by a processor, the steps of the transmission method according to the first aspect or the steps of the transmission method according to the second aspect are implemented.

According to a ninth aspect, a chip is provided. The chip includes a processor and a communication interface. The communication interface is coupled to the processor. The processor is configured to run a program or instructions to implement the transmission method according to the first aspect or the transmission method according to the second aspect.

According to a tenth aspect, a computer program/program product is provided. The computer program/program product is stored in a storage medium. The computer program/program product is executed by at least one processor to implement the steps of the transmission method according to the first aspect or the second aspect.

Embodiments of this application provide the transmission method, to improve a signaling interaction process of an internet of things device, redefine interaction signaling of the internet of things device, and support more functions such as access control, security transmission control, and retransmission control in the signaling interaction. If the first device pages the internet of things device, with the transmission method provided in this application, contention-free access of a physical network device can be supported, reducing a quantity of signaling interactions.

**BRIEF DESCRIPTION OF THE DRAWINGS**

FIG. 1 is a block diagram of a wireless communication system applicable to an embodiment of this application;
FIG. 2 is a flowchart of OOK-based backscatter transmission according to an embodiment of this application;
FIG. 3 is a diagram of transmission of a backscatter communication device according to an embodiment of this application;
FIG. 4 is a schematic flowchart of inventory according to an embodiment of this application;
FIG. 5 is a diagram of an RFID process and a status of a tag according to an embodiment of this application;
FIG. 6 is a flowchart of convention-based random access according to an embodiment of this application;
FIG. 7 is a flowchart of contention-free random access according to an embodiment of this application;
FIG. 8 is a flowchart of two-step random access according to an embodiment of this application;
FIG. 9 is a schematic flowchart of random access fallback according to an embodiment of this application;
FIG. 10 is another schematic flowchart of random access fallback according to an embodiment of this application;
FIG. 11 is a flowchart of new two-step random access according to an embodiment of this application;
FIG. 12 is a flowchart of a transmission method according to an embodiment of this application;
FIG. 13 is a flowchart of another transmission method according to an embodiment of this application;
FIG. 14 is a block diagram of a structure of a transmission apparatus according to an embodiment of this application;
FIG. 15 is a block diagram of a structure of another transmission apparatus according to an embodiment of this application;
FIG. 16 is a block diagram of a structure of a communication device according to an embodiment of this application;
FIG. 17 is a block diagram of a structure of a terminal device according to an embodiment of this application;
FIG. 18 is a block diagram of a structure of a network side device according to an embodiment of this application; and
FIG. 19 is a block diagram of a structure of another network side device according to an embodiment of this application.

**DETAILED DESCRIPTION**

The following clearly describes the technical solutions in embodiments of this application with reference to the accompanying drawings in embodiments of this application. Apparently, the described embodiments are some but not all of embodiments of this application. All other embodiments obtained by a person of ordinary skill in the art based on embodiments of this application fall within the protection scope of this application.

The terms "first", "second", and the like in this specification and claims of this application are used to distinguish between similar objects instead of describing a specific order or sequence. It should be understood that the terms used in such a way are interchangeable in appropriate circumstances, so that embodiments of this application can be implemented in other orders than the order illustrated or described herein. Moreover, the objects distinguished by "first" and "second" are usually of one type, and the quantity of objects is not limited. For example, there may be one or more first objects. In addition, "and/or" in the specification and the claims represents at least one of connected objects, and the character "/" generally indicates that the associated objects have an "or" relationship.

It should be noted that a technology described in embodiments of this application is not limited to a long term evolution (Long Term Evolution, LTE)/LTE-advanced (LTE-Advanced, LTE-A) system, and is also applicable to another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are often used interchangeably, and the technology described herein may be applied to the systems and radio technologies mentioned above as well as other systems and radio technologies. A new radio (New Radio, NR) system is described below as an example, and the term NR is used in most of the following descriptions. Nevertheless, the technologies may also be applied to an application other than an application of the NR system, for example, a $6^{th}$ generation ($6^{th}$ Generation, 6G) communication system.

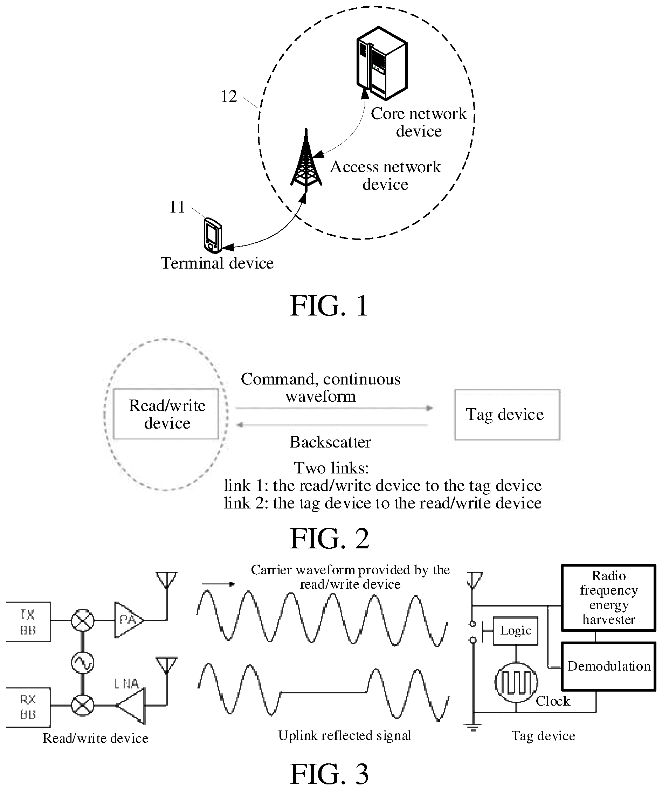

FIG. 1 is a block diagram of a wireless communications system applicable to an embodiment of this application. The wireless communication system includes a terminal device 11 and a network side device 12. The terminal device 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle-mounted device (VUE), a pedestrian terminal (PUE), a smart home (a home device with a wireless communication function, such as a refrigerator, a television, a washing machine, or furniture), a game console, a personal computer (personal computer, PC), a teller machine, or a self-service machine. The wearable device includes a smartwatch, a smart hand ring, a smart headphone, smart glasses, a smart jewelry (a smart bracelet, a smart chain bracelet, a smart ring, a smart necklace, a smart anklet, a smart chain anklet, or the like), a smart wristband, smart clothing, and the like. It should be noted that a specific type for the terminal device 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as same technical effects are achieved, the base station is not limited to a specific technical term. It should be noted that in embodiments of this application, a base station in an NR system is used merely as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, a core network device in the NR system is used merely as an example for description, and a specific type of the core network device is not limited.

First, related contents in embodiments of this application are described.

1. Ambient internet of things (A-IoT, A-IoT)

Ambient IoT is a new to-be-researched 3GPP IoT technology. An ambient IoT terminal has ultra-low complexity and ultra-low power consumption.

Ambient IoT, also referred to as ambient power-enabled internet of things (Ambient power-enabled Internet of Things, Ambient power-enabled IoT), is an IoT service in which an IoT terminal is powered through energy harvesting (energy harvesting). The IoT terminal has no battery or a limited energy storage capability (for example, uses one capacitor). An energy source for energy harvesting includes a radio wave, light, a motion, heat, or another appropriate energy source.

An ambient IoT device is an IoT device. This type of device has low overall power consumption, including low power consumption signal receiving and low power consumption signal sending. Because the overall power consumption is low, and communication energy may be sourced from an environment, for example, wind energy, kinetic energy, thermal energy, or a radio frequency RF signal, this type of device may also be referred to as an ambient internet of things device, a passive internet of things (passive IoT) device, or a response device. A signal sending manner of this type of device includes:

backscattering the RF signal for signal transmission, and this type of device may also be referred to as an electronic tag or a radio frequency tag (RFID).

Some active tags have an active signal generation capability. However, to achieve low power consumption of the device, power of the active tags is generally less than 0 dBm, for example, less than or equal to -10 dBm.

The ambient IoT terminal may be classified as three types of devices based on the energy source, the energy storage capability, passive (Passive) or active (Active) transmission, and the like:

a device type A: a passive device (Passive Device) that has no energy stored and no independent signal generation capability or amplification capability, that is, uses backscatter transmission;

a device type B: a semi-passive device (semi-passive Device) that has energy stored but no independent signal generation capability, that is, uses backscatter transmission, where use of the stored energy may include amplifying a reflected signal; and

a device type C: an active device (Active Device) that has energy stored and can independently generate a signal, that is, is an active radio frequency component for transmission.

2. Backscatter communication (Backscatter Communication, BSC)

Backscatter communication means that a backscatter communication device performs signal modulation by using a radio frequency signal in another device or an environment to transmit information of the backscatter communication device. As a passive or low energy consumption technology, a backscatter (Backscatter) technology is technically characterized in that signal transmission may be completed by changing a feature such as phase or amplitude information of a received ambient radio frequency signal, to implement extremely low power consumption or zero power consumption information transmission.

FIG. 2 is a flowchart of OOK-based backscatter transmission. As shown in FIG. 2, in a simple implementation, when a tag needs to send "1", the tag reflects an incident carrier signal. When the tag needs to send "0", the tag does not perform reflection.

FIG. 3 is a diagram of transmission of the backscatter communication device. As shown in FIG. 3, the backscatter communication device controls a reflection coefficient $\Gamma$ of a circuit by adjusting internal impedance of the backscatter communication device, to change an amplitude, a frequency, a phase, and the like of the incident signal, and implement modulation of the signal. The reflection coefficient of the signal may be represented as:

$$\Gamma = (Z\_1 - Z\_0)/(Z\_1 + Z\_0) = |\Gamma| \, e^{\wedge}(j\theta\_T) \quad (1)$$

$Z\_0$ is antenna characteristic impedance, and $Z\_1$ is load impedance. If the incident signal is S_in (t), an output signal is S_out (t) = S_in (t)$|\Gamma|$ e^(j$\theta$_T). Therefore, corresponding amplitude modulation, frequency modulation, or phase modulation can be implemented by properly controlling the reflection coefficient.

Reception performed by this type of device is usually low power consumption reception, and a signal is usually received through low power consumption envelope detection at a radio frequency, an intermediate frequency, or a baseband. Simple modulation manners such as OOK, ASK, and FSK are usually used for a waveform of a sent signal.

A device communicating with this type of low power consumption device is referred to as a read/write device, and may be, for example, a terminal, a base station, or a device having a read/write function, for example, a reader/writer. This is not specifically limited herein.

3. A-IoT data type/service type

3GPP R19 A-IoT researches the following data types/service types:

- device-originated (Device-originated, DO); and
- device-terminated (Device-terminated, DT).

DO and DT data indicates that a data stream is from an A-IoT device (similar to an RFID tag) or is transmitted to an A-IoT device. A data stream from an A-IoT device, that is, DO data, may be further classified as follows.

- DO-A: The device autonomously initiates data transmission.

For example, a large quantity of various sensors are connected, and the sensors collect and actively report, when necessary, information about an environment, a device, and a living creature.

- DA-DTT: The device initiates data transmission after the device is triggered by a network.

For example, asset identification, status reporting, and tracking are all DL triggered reports, and a read/write device (Reader) collects data from a tag by triggering an inventory procedure. Because the data is generated or initiated in an IoT device, this service should be considered as a command sent by the reader to trigger a tag device (tag) to initiate a DO service.

4. Information transmission between a reader and a tag in RFID

RFID is a conventional backscatter communication system, and a main design objective of RFID is to perform ID identification and data reading on a BSC device (that is, the tag) in coverage of a reader/writer. Because RFID is initially applied to automated inventory of a large quantity of goods, a process of performing identification and data reading on the tag is also referred to as inventory.

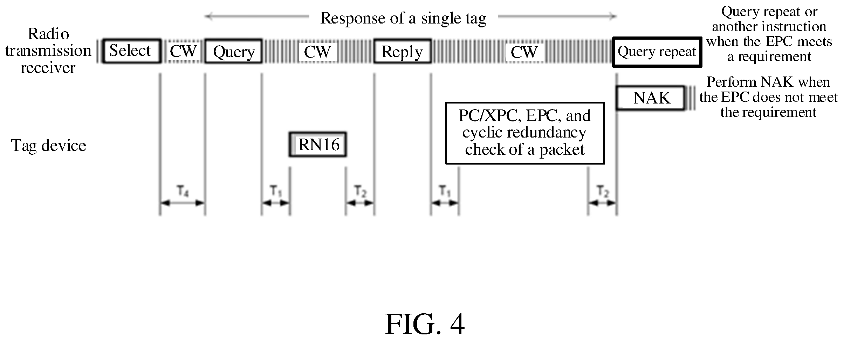

An EPC C1G2 RFID system defined by ISO 18000-6c is used as an example. FIG. 4 is a schematic flowchart of inventorying the tag. After the reader/writer sends a query (Query) instruction, the tag responds with a reply (Reply). For example, the reply is RN16. The tag generates a 16-bit random number and sends the 16-bit random number to the reader/writer. Then, after the reader/writer sends a sequence to the tag by using an ACK instruction, the tag sends subsequent data (such as PC/XPC and EPC) to the reader/writer after successfully verifying the RN16 in the ACK.

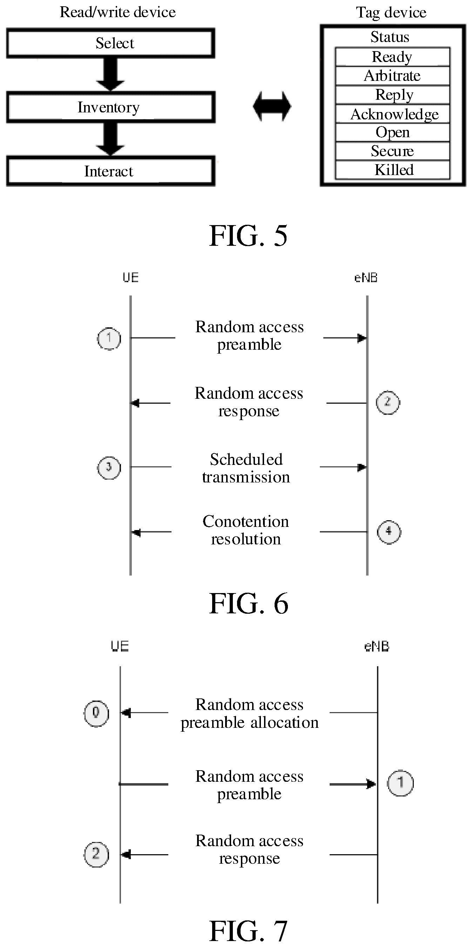

FIG. 5 is a diagram of an RFID process and a status of the tag. An instruction for an operation of the reader/writer reader is shown in Table 1.

Table 1

| Operation type | Instruction | Function |
|---|---|---|
| Select | Select (Select) | Select a tag |
| Inventory | Query (Query) | Start an inventory action Generate a random number to determine reply time |
| | Query adjust (Query Adjust) | Adjust an original quantity of slots of the tag |
| | Query repeat (QueryRep) | A quantity of slots of the tag is reduced |
| | EPC acknowledge (ACK) | Instruction that the reader replies the tag with |
| | NAK | Instruction sent by the reader The tag is back to an arbitrate (Arbitrate) state |
| Access | Random request (Req_RN) | Request the tag to generate a random number |
| | Read (Read) | Read data from a location in storage of the tag |
| | Write (Write) | Write data into the storage of the tag |
| | Kill (Kill) | No reply is made to any reader anymore Prevent leakage of privacy The tag can no longer be used |
| | Lock (Lock) | The tag can no longer perform a write action Prevent data from being arbitrarily changed |
| | Access (optional) | The tag is caused to change from an open (Open) state to a secure (Secure) state when the tag has a password |
| | BlockWrite (optional) | Write into a plurality of blocks at a time |
| | Lock Erase (optional) | Clear a plurality of blocks in storage of a single tag |

The status of the tag (tag) is shown in Table 2.

Table 2

| Status of the tag | Description |
|---|---|
| Ready (Ready) | Not in a currently performed inventory operation |
| Arbitrate (Arbitrate) | The tag currently belongs to a specific inventory operation Represent that a number of a slot is not yet zero, indicating remaining a waiting state |
| Reply (Reply) | Generate a 16-bit random number for a reader Enter a response state when an ACK message is received Return to an arbitrate state when no ACK message is received |
| Acknowledge (Acknowledge) | Enter any state other than the killed state from this state |
| Open (Open) | When a tag whose password is not zero receives an instruction of a random request in the acknowledge state |
| Secure (Secure) | When a tag whose password is zero receives, in the acknowledge state, an instruction of a random request sent by a reader |
| Killed (Killed) | Permanently unavailable |

5. Anti-collision method for a backscatter communication system

In an existing backscatter communication system, a reader usually can receive a backscattered signal of only one tag at a same moment. For example, in an inventory procedure of RFID, when the reader sends a control command to start the inventory procedure, a value Q is indicated. The tag locally generates a random number q in a range of {0, ..., $2^Q-1$}. A tag whose current random number is 0 transmits a backscattered signal in response to the control command of the reader. A tag whose current random value is not 0 temporarily does not transmits a backscattered signal. After completing communication with the tag whose random value is 0, the reader may continue to send a control command (for example, queryRep) indicating, for example, a tag to subtract 1 from a generated random number. A tag whose random value is reduced to 0 performs backscatter transmission in response to the control command.

6. 3GPP random access (Random Access) procedure

Random access is a basic function of a mobile communication system, and is a necessary step for establishment of a signaling connection between a UE and a network side.

Usage scenario of random access

According to descriptions of a 3GPP related protocol (TS 38.300-9.2.6), the usage scenario of random access is as follows:

initial access in an idle state (Initial access from RRC_DLE);
a new scenario in NR: transition from an RRC_INACTIVE state (Transition from RRC_NACTIVE);
a new scenario in NR: request for OSI (Request for Other SI);
RRC connection reestablishment in a connected state (RRC Connection Reestablishment Procedure);
handover (Handover);
uplink or downlink data arrival in a case of uplink non-synchronization (DL or UL data arrival during RRC_CONNECTED when UL synchronisation status is "non-synchronised");
uplink data arrival but no PUCCH resource for sending a scheduling request (SR);
a scheduling request (SR) failure;
obtaining uplink synchronization during SCell addition;
synchronization reconfiguration through RRC (PCell change, PSCell addition/change); and
a new scenario in NR: beam failure recovery (Beam failure recovery).

A random access procedure includes a contention-based random access (contention-based RA, CBRA) and non-contention random access (contention-free RA, CFRA).
A contention-based random access procedure includes four steps of access completed by using a message 1 to a message 4, as shown in FIG. 6. A contention-free random access procedure needs only two steps, as shown in FIG. 7.
Contention-based random access (contention-based RA, CBRA) is described as follows.

(1) Random access procedure and contention resolution

The contention-based four-step random access (RACH) procedure includes the following steps.

- The UE first sends the Msg1 including a preamble to a network.
- After detecting a preamble, the network sends the Msg2/an RAR (random access response) message including a serial number of the preamble detected by the network and an uplink radio resource allocated to the UE for sending the Msg3.
- After receiving the Msg2, the UE confirms that at least one serial number in the serial number of the preamble carried in the Msg2 is the same as a serial number of the preamble sent by the UE, and then sends, based on the resource indicated by an RAR, the Msg3 including contention resolution information.
- After receiving the Msg3, the network sends the Msg4 including contention resolution information.
- The UE receives the Msg4, and confirms that the contention resolution information is the same as that sent by the UE by using the Msg3, to complete four-step random access.

The network adds, in the RAR, UL grant information indicating of Msg3 PUSCH scheduling information, and information such as a RAPID (RACH preamble ID), a TC-RNTI, and a TA. If the network does not receive an Msg3 PUSCH, the network may schedule retransmission of the Msg3 PUSCH in a PDCCH scrambled by using the TC-RNTI.

For the contention-based random access procedure, different UEs randomly select preambles for transmission. In this way, different UEs may select a same preamble on a same time-frequency radio resource (RO resource) for transmission. This case may be understood as a preamble collision between the UEs. In this case, different UEs may receive a same RAR, and then different UEs transmit Msg3 PUSCHs based on the scheduling information in a UL grant in the RAR. Because the conventional technology does not support repeated transmission of the Msg3 PUSCH, and the network can obtain, based on one Msg3 PUSCH scheduling resource, only a PUSCH (including contention resolution information) sent by one UE, the network adds, in the Msg4, the contention resolution information received by using the Msg3. If the contention resolution information in the Msg4 received by the UE matches the contention resolution information sent by the UE in the Msg3 PUSCH, the UE considers that contention resolution succeeds. If the contention resolution information in the Msg4 received by the UE does not match the contention resolution information sent by the UE in the Msg3 PUSCH, it is considered that contention resolution fails.

If contention resolution fails, the UE reselects a RACH transmission resource, and performs RACH transmission for a next random access attempt.

In the contention-based four-step RACH procedure, after the Msg1 (preamble) and the Msg2 (RAR), a plurality of UEs may send Msg1 on a same RACH occasion (that is, a same time-frequency resource) by using a same PRACH preamble. In this case, a temporary C-RNTI (that is, a T-C-RNTI) in the Msg2 may be used by the plurality of UEs. Therefore, contention resolution needs to be performed by using the Msg3/4, to determine a clear C-RNTI for the UE to avoid a conflict.

A contention resolution mechanism depends on whether the UE already has the C-RNTI.

If the UE already has the C-RNTI, for example, in beam failure recovery, RACH triggered by a PDCCH order, or RACH is triggered by a MAC/RRC layer, a PDCCH is scheduled by using the C-RNTI for transmission, and a UL grant for new transmission is included, the UE sends a C-RNTI MAC CE by using the Msg3. Then, if the PDCCH may be successfully obtained by using the C-RNTI, it is considered that random access succeeds. Because the C-RNTI is UE-specific, that is, specific to the UE, another UE cannot obtain the PDCCH without knowing the C-RNTI.

If the UE does not have the C-RNTI, the UE sends a CCCH SDU, for example, RRC setupRequest, by using the Msg3. The CCCH SDU includes a contention resolution identity (identity). Then, the UE successfully obtains the PDCCH in the Msg4 by using the T-C-RNTI.

- If a content resolution identify MAC CE in the Msg4 can also be successfully obtained, and an identity in the MAC CE is consistent with that sent by the UE by using the Msg3, the UE considers that the RACH procedure succeeds, and formally converts the T-C-RNTI into the C-RNTI.
- If the content resolution identify MAC CE in the Msg4 cannot be successfully obtained, and the identity in the MAC CE is inconsistent with that sent by the UE by using the Msg3, the UE discards the T-C-RNTI, considers that contention resolution fails, and discards an obtained MAC PDU.

(2) Messages 1 to 4

Msg1

After a resource configuration for random access is performed, a selected preamble needs to be sent on a selected PDCCH occasion, where the sent preamble is the Msg1. During sending, an RA-RNTI needs to be calculated based on the selected PRACH occasion. Each PRACH occasion corresponds to a unique RA-RNTI. When subsequently receiving a Msg2, a UE also needs to monitor a PDCCH scrambled by the RA-RNTI of the UE, to determine a RAR sent to the UE.

Transmit power of the PRACH is calculated, and a calculation formula is as follows:

$$PPRACH=\min\{PCMAX, PPRACHtarget+PL\}\ [dBm]\ (2)$$

In the formula, PCMAX is maximum output power that can be configured by the UE.

PPRACHtarget is calculated according to the following formula:

PPRACHtarget=preambleReceivedTargetPower+Delta_Preamble+(Preamble_Tr ansmission_Counter-1)*powerRampingStep (3)

preambleReceivedTargetPower (in RACH-ConfigGeneric) is a target receive power of a base station, power-RampingStep (in RACH-ConfigGeneric) is a PRACH power ramping step, and Delta_Preamble is a power adjustment amount for different preamble sequence formats.

Msg2

The Msg2 is a RAR message. After sending a Msg1, a UE monitors a PDCCH in a window. Then, the PDCCH indicates a location of a PDSCH, where the PDSCH includes a RAR.

The RAR is a MAC PDU, and includes a plurality of MAC subPDUs and paddings that may exist. There are the following three cases for each MAC subPDU:

- a MAC subtitle includes only a backoff time indication;
- the MAC subtitle includes only a RAPID (that is, acknowledgement to an SI request); and
- the MAC subtitle includes the RAPID and a MAC RAR.

The backoff time indication (Backoff Indicator) has a field size of 4 bits, and indicates backoff time after the Msg2 fails to be received, and the UE selects time within the backoff time to resend the Msg1.

A field size of the RAPID (random access preamble identifier, The Random Access Preamble IDentifier) is 6 bits.

Content of the MAC RAR includes at least one of the following:

R: having a field size of one bit reserved, and usually set to "0";
a timing advance indication (Timing Advance Command), used to tell the UE of timing advance information, and having a total of 12 bits;
an uplink scheduling indication (UL Grant), indicating information of a PUSCH occupied for subsequently sending a Msg3, and having a total of 27 bits;
RAR uplink grant information (RAR UL grant), used to schedule the PUSCH for transmitting the Msg3; and
a temporary C-RNTI (Temporary C-RNTI), which is a temporary C-RNTI allocated by a network to the UE, where a UE not in a connected state does not have a C-RNTI, so that the network needs to allocate a temporary C-RNTI to the UE; and if random access succeeds, the temporary C-RNTI is subsequently promoted to a real C-RNTI, with a total of 16 bits.

Msg3

The Msg3 is a third message in the random access procedure. For random access not in a connected state, the Msg3 is mainly configured by a higher layer. For random access in the connected state, the Msg3 mainly includes a C-RNTI.

For initial access in an idle state, the Msg3 mainly includes an RRC setup request (RRC SetupRequest).

For RRC connection reestablishment, the Msg3 mainly includes an RRC reestablishment request (RRC ReestablishmentRequest).

For an SI request, the Msg3 mainly includes an RRC system information request (RRC SystemInfoRequest).

For cell handover, the Msg3 mainly includes RRC reconfiguration complete (RRC Reconfiguration Complete).

For access recovery in an inactive state, the Msg3 mainly includes an RRC establishment request (RRC Resume Request).

For other random access in the connected state, for example, uplink out of synchronization or a resource scheduling request during sending of uplink data, the Msg3 needs to include an existing C-RNT of a UE.

In general, the Msg3 needs to include a unique identifier of the UE, and regardless of whether the unique identifier is a C-RNTI or another configuration from the higher layer, only the unique identifier can be used for contention resolution.

Msg4

After sending a Msg3, a UE starts a retransmission-contention timer (ra-ContentionResolutionTimer), and resets the timer when HARQ retransmission is performed on the Msg3. Before the timer expires or stops, the UE keeps monitoring a PDCCH. If the ra-ContentionResolutionTimer expires, the UE discards a TC-RNTI and considers that conflict resolution fails.

A message 2 is used to send a RAR in both contention-based random access and contention-free random access. The UE monitors a RAR corresponding to an RA-RNTI in a RAR window.

Because contention-free random access has a problem that the UE sends a same preamble on a same PRACH resource, after receiving the message 2, a message 3 further needs to be sent based on a UL grant in the message. In addition, the UE adds an identifier of the UE in the message 3, and starts the contention resolution timer while sending the message 3. If the message 4 sent by a base station is received before the contention resolution timer expires, contention resolution of the UE succeeds. The base station adds a UE identifier in the message 4. The UE may determine, based on the UE identifier carried by the message 4, whether the message 4 is a message 4 for the UE, to determine whether contention succeeds.

Msg5

The Msg5 is a fifth message in the random access procedure, for example, an RRC connection setup complete (RRC Connection setup complete Service request)) message.

Two-step random access (two-step RA random access)

In NR Rel-16, to shorten an access system delay, two-step RA, that is, an RA procedure including two steps, is introduced: A terminal sends a MsgA to a network side and then receives a MsgB delivered by the network side. The MsgA includes a function of the Msg1 or the Msg1 and the Msg3, and the MsgB includes a function of the Msg2 or the Msg2 and the Msg4.

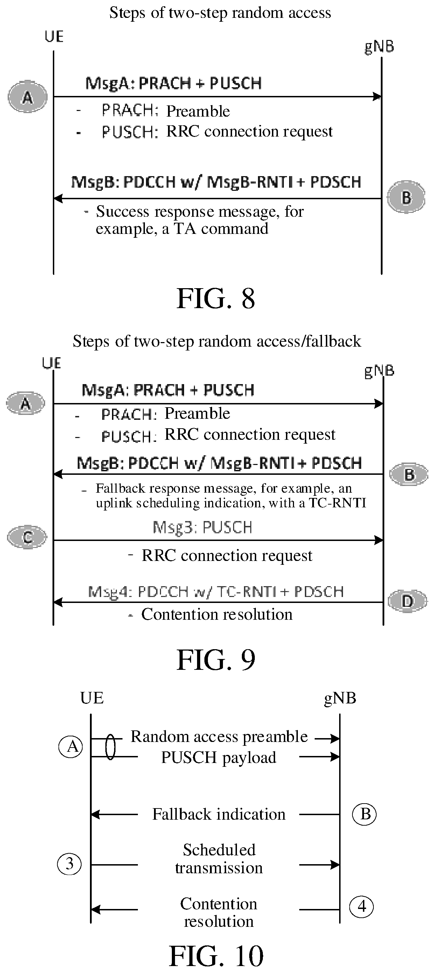

FIG. 8 is a flowchart of two-step random access. As shown in FIG. 8, a first step is that a UE sends a MsgA to a network side. The MsgA includes a MsgA preamble (preamble) part and a MsgA PUSCH part, where the preamble part is sent on an RO for two-step RACH, and the PUSCH part is sent on a MsgA PUSCH resource associated with sending of a MsgA preamble and the RO. The MsgA PDCCH resource is a group of PDCCH resources configured relative to each PDCCH slot, and includes a time-frequency resource and a DMRS resource.

After receiving the MsgA, the network side sends a MsgB message to the UE.

If the UE does not receive the MsgB within specific time, the UE adds 1 to a counter for a quantity of sending times of the MsgA, and resends the MsgA. If the counter for the quantity of sending times of the MsgA reaches a specific threshold, the UE switches from a two-step random access procedure to a four-step random access procedure.

FIG. 9 and FIG. 10 are respectively schematic flowcharts of random access fallback. A main process of fallback from two-step RA to four-step RA is as follows.

1. The UE sends a MsgA (MsgA PRACH + MsgA PUSCH) to the network side.
2. After receiving the MsgA, the network side sends a MsgB message to the UE.

If the MsgB received by the UE includes FallbackRAR matching the sent MsgA RACH, the UE may extract data from a MsgA buffer and store the data in a Msg3 buffer. Then, the UE sends a Msg3 to a network side, and then performs contention resolution.

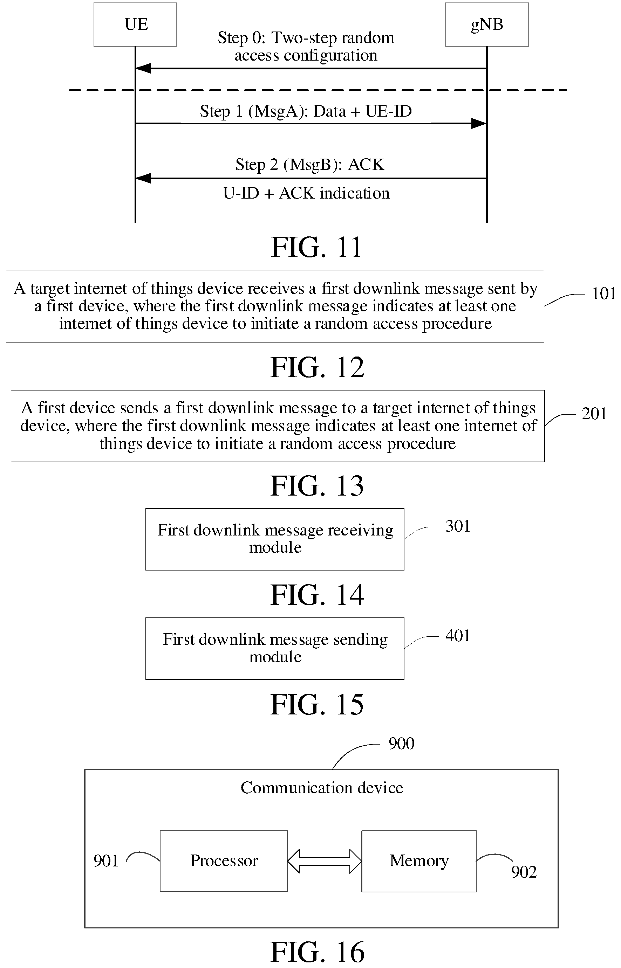

FIG. 11 is a flowchart of new two-step random access. As shown in FIG. 11, new two-step random access (2-Step RACH) mainly includes the following steps.

Step 0: A network side configures a UE with configuration information of new two-step random access, for example, including sending resource information corresponding to a MsgA and a MsgB.

Step 1: The UE triggers a two-step RACH procedure. The UE sends request information (MsgA) to the network side, for example, through a PUSCH (Physical Uplink Shared Channel, physical uplink shared channel). In addition, the UE may also send PRACH (Physical Random Access Channel, physical random access channel) information to the network side.

Step 2: After sending the MsgA, the UE monitors reception of a MsgB within a period of time (random access response window, Random Access Response window, RAR window). If the UE fails to receive the MsgB, the UE resends the MsgA.

For a UE in a connected state, when two-step RACH is triggered by "uplink data arrival and uplink out-of-synchronization", after the network side successfully receives a MsgA, the network side sends a MsgB. For sending of the MsgB, the network side schedules transmission of a downlink PDSCH (Physical Downlink Shared Channel, physical downlink shared channel) by using a C-RNTI (Cell Radio Network Temporary Identity, cell radio network temporary identity) PDCCH (Physical Downlink Control Channel, physical downlink control channel). The PDSCH includes an absolute uplink timing MAC CE (MAC Control Element) of the UE, that is, an absolute timing advanced command MAC CE, for uplink synchronization of the UE.

The following describes in detail a transmission method provided in embodiments of this application by using some embodiments and application scenarios thereof with reference to the accompanying drawings.

According to a first aspect, an embodiment of this application provides a transmission method, applied to a target internet of things device. FIG. 12 is a flowchart of the transmission method according to an embodiment of this application. As shown in FIG. 12, the method may specifically include the following steps.

Step 101: The target internet of things device receives a first downlink message sent by a first device, where the first downlink message indicates at least one internet of things device to initiate a random access procedure.

The first downlink message includes at least one of the following:

identification information of the at least one internet of things device, where the identification information of the at least one internet of things device includes identification information of the target internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

It should be noted that the internet of things device in this embodiment of this application may be an A-IoT device, or may be another internet of things device. The target internet of things device is an internet of things device paged by the first device. The first device includes one or more of a core network device, an access network device, a terminal device, and a reader (Reader).

The first indication is a backoff time indication (Backoff Indicator), and indicates backoff time after expiration of a retransmission timer or a failure in reception of a second downlink message. The A-IoT device selects time within the backoff time to resend data such as a first uplink message.

The identification information of the target internet of things device identifies one target A-IoT device or a group of target A-IoT devices. For example, the A-IoT device can be uniquely identified within a first network. Alternatively, the identification information of the target A-IoT device includes category information or partial identification information of the A-IoT device, so that a group of A-IoT devices is indicated through matching with identifiers.

Optionally, the identification information of the at least one internet of things device includes at least one of the following:

first identification information of the at least one internet of things device, where the first identification information is a unique identity of the internet of things device; and
second identification information, where the second identification information indicates at least two internet of things devices.

The paging cause indicates a reason why the first device requires the target internet of things device to access.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane, that is, adding to-be-transmitted data in an RRC or MAC message;
transmitting data by using a user plane;
transmitting data in a random access procedure, for example, sending data by using messages such as a Msg1, a Msg3, and a Msg5 in a contention-free access or two-step access procedure; and
transmitting data in a case in which a first condition is satisfied, where the first condition includes at least one of the following:
the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

The time domain resource (TDM resource) or the frequency domain resource (FDM resource) may include access time, a frequency, a channel (Channel), and the like.
Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

The security verification information is a verification result calculated based on the security algorithm or the key.
According to this embodiment of this application, a signaling interaction process of an internet of things device is improved, interaction signaling of the internet of things device is redefined, and more functions such as access control, security transmission control, and retransmission control are supported in the signaling interaction. If the first device pages the internet of things device, with the transmission method provided in this application, contention-free access of a physical network device can be supported, reducing a quantity of signaling interactions.
It should be noted that the identification information of the target internet of things device is associated with the access procedure information, the paging cause, the data transmission mode, the security information, the access resource configuration information, the retransmission resource configuration information, and the like.
In an implementation of this application, the first downlink message indicates one target A-IoT device to initiate an access procedure. The identification information of the target A-IoT device can uniquely identify the A-IoT device in the first network. In this way, an access resource is configured for access of the target A-IoT device, to avoid an access conflict.
In still another implementation of this application, the first downlink message indicates a plurality or a group of target A-IoT devices to initiate an access procedure. The first downlink message may include a plurality of sets of information. For example, each set of information includes identification information of one target A-IoT device and a corresponding access resource configuration. Access resource configurations corresponding to the target A-IoT devices are different. In this way, an access conflict is avoided.
In an optional embodiment of this application, the method further includes:
the target internet of things device sends the first uplink message to the first device in response to the first downlink message.

The first uplink message includes at least one of the following:

a paging response;
an inventory result;
target service data; and
the security verification information, that is, the verification result calculated based on the security algorithm or the key.

The target service data is service data that the target internet of things device needs to transmit. Further, the service data may carry an electronic product code (Electronic Product Code, EPC) or other identification information.

Optionally, that the second indication indicates the target internet of things device to report the security verification information includes: the second indication indicates the target internet of things device to report the security verification information by using a response message, where the response message includes at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

After the A-IoT device sends the first uplink message to the first device, the A-IoT device starts the retransmission timer. The time control information in the first uplink message may be timing duration of the retransmission timer, or may be a counting manner of the counter. The A-IoT device determines a retransmission occasion based on a count value of the counter. Optionally, the time control information includes a count threshold of the counter and/or the timing duration of the retransmission timer. After the target internet of things device sends the first uplink message, the counter performs counting each time an access occasion passes or the target internet of things device receives a downlink excitation signal. In a case in which a quantity of times counted by the counter is greater than or equal to the count threshold or a value of the retransmission timer is greater than or equal to the timing duration, the target internet of things device starts retransmission.

In an optional embodiment of this application, the method further includes:
the target internet of things device receives the second downlink message sent by the first device.

The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and
access resource configuration information.

In a possible application scenario, the first uplink message may fail to be sent, for example, an uplink sending conflict occurs. The first device may send a retransmission request to indicate the A-IoT device to retransmit the first uplink message. In an implementation, the second downlink message may be the same as the first downlink message.

Optionally, the method further includes:
the target internet of things device performs data retransmission in a case in which a second condition is satisfied.

The second condition includes at least one of the following:

the value of the retransmission timer satisfies a timing condition;
the target internet of things device does not receive the second downlink message; and
the target internet of things device receives the second downlink message, and the second downlink message carries the seventh indication or the third indication.

Optionally, the method further includes:
the target internet of things device determines, based on first information, a random access resource for data sending or retransmission.

The first information includes at least one of the following:

the backoff time configured in the first downlink message; and
the access resource configuration information carried in the first downlink message.

For an active device (Active device), the first downlink message may be a system message, a paging message, a select message (Select Message), or the like; and the first uplink message is data transmission actively initiated by the A-IoT device, or a response to the paging message.

For a passive device (passive device), the first downlink message may be a paging message, a select message Select Message, or the like; and the first uplink message is a response to the first downlink message.

According to the foregoing embodiment, the first downlink message or the second downlink message may include a target resource, for example, an access resource configuration or a retransmission resource configuration.

A passive device or a backscatter-based A-IoT device needs to perform uplink data transmission, for example, send the first uplink message, on the target resource.

Optionally, the target internet of things device includes a passive device or a backscatter transmission-based internet of things device. The first downlink message or the second downlink message carries second information, and the second information indicates an access occasion. The method further includes the following steps.

Step S11: The target internet of things device determines a target access occasion based on the second information.

Step S12: The target internet of things device performs uplink data transmission on the target access occasion.

Optionally, the second information includes at least one of the following:

the target access occasion; and
target backoff time.

The target access occasion in the second information may be a target access occasion identifier identifying an access occasion. For example, the target access occasion identifier indicates a serial number of the access occasion. Each access occasion corresponds to an excitation signal sent by a network. The A-IoT device performs backscattering on the target access occasion based on the excitation signal sent by the network.

The A-IoT device may randomly select a piece of backoff time from even distribution between 0 and the backoff time as the target backoff time, for example, randomly select a value from values $\{0, ..., 2^{targetBI}-1\}$ as the backoff time. The target backoff time corresponds to one target access occasion. The A-IoT device performs backscattering on the target access occasion based on the excitation signal sent by the network.

Optionally, that the target internet of things device performs uplink data transmission on the target access occasion includes the following steps.

Step S21: The target internet of things device starts a counter based on the target access occasion, where the counter is configured to control waiting duration.

Step S22: The target internet of things device performs uplink data transmission in a case in which a count value of the counter satisfies the waiting duration.

After determining the target access occasion, the target internet of things device may start the counter (Counter), configured to record the waiting duration between a current moment and the target access occasion.

Optionally, the count value of the counter satisfies at least one of the following:

increasing or decreasing the count value of the counter by 1 each time an uplink transmission occasion passes; and
increasing or decreasing the count value of the counter by 1 each time the target internet of things device receives a downlink command sent by the first device.

For example, an initial count value of the counter may be initialized to be a quantity N of access occasions that need to be awaited between the current moment and the target access occasion. Each time an uplink transmission occasion passes, the count value is decreased by 1. In a case in which the count value is decreased to 0, the A-IoT device performs backscattering on the target access occasion based on the excitation signal sent by the network.

Alternatively, the target internet of things device increases or decreases the count value of the counter by 1 based on the downlink command received from the first device.

Alternatively, the target internet of things device calculates, based on an uplink pattern (UL pattern), a quantity of uplink transmission occasions that need to be awaited, and further initializes the counter based on the quantity of uplink transmission occasions that need to be awaited. The first device may provide a downlink command or excitation for each uplink transmission occasion. Each time the internet of things device receives a downlink command or excitation, the internet of things device increases or decreases the count value of the counter by 1.

Optionally, in a case in which the target internet of things device supports backscatter transmission in a time division multiplexing mode in X slots each time, that the target internet of things device performs uplink data transmission in the case in which the count value of the counter satisfies the waiting duration includes:
the target internet of things device performs uplink data transmission in a case in which the count value of the counter is equal to X, where X is an integer greater than 1.

It is assumed that one excitation signal supports uplink reflection of X slots, where X is a quantity of slots for each course of TDM. The target internet of things device may increase or decrease the count value of the counter by 1 based on the downlink command of the first device. For example, the initial value of the counter is set to a number greater than X. Each time a downlink command or excitation signal is received, the count value is decreased by 1, and transmission can be prepared when the counter<=X.

In this embodiment of this application, an uplink transmission occasion for a passive device is controlled, so that an access conflict between a plurality of passive internet of things devices can be avoided.

Optionally, the target internet of things device includes an active device. The first downlink message or the second downlink message carries third information, and the third information indicates an uplink transmission occasion. The method further includes the following steps.

Step S31: The target internet of things device determines the uplink transmission occasion based on the third information.

Step S32: The target internet of things device performs uplink data transmission based on the uplink transmission occasion.

The third information includes at least one of the following:

> waiting time;
> an uplink transmission slot;
> a time division multiplexing mode; and
> an uplink transmission mode.

The active device may determine the uplink transmission occasion based on the third information carried by the first downlink message or the second downlink message.

In conclusion, this embodiment of this application provides the transmission method, to improve a signaling interaction process of an internet of things device, redefine interaction signaling of the internet of things device, and support more functions such as access control, security transmission control, and retransmission control in the signaling interaction. If the first device pages the internet of things device, with the transmission method provided in this application, contention-free access of a physical network device can be supported, reducing a quantity of signaling interactions.

According to a second aspect, an embodiment of this application provides another transmission method. FIG. 13 is a flowchart of the another transmission method according to an embodiment of this application. As shown in FIG. 13, the method may specifically include the following steps.

Step 201: A first device sends a first downlink message to a target internet of things device, where the first downlink message indicates at least one internet of things device to initiate a random access procedure.

The first downlink message includes at least one of the following:

> identification information of the at least one internet of things device;
> a paging cause;
> access procedure information, where the access procedure information indicates a random access type to be used by the target internet of things device;
> data transmission information, where the data transmission information indicates a data transmission mode used by the target internet of things device;
> access resource configuration information for the target internet of things device;
> time control information, where the time control information indicates a retransmission occasion for the target internet of things device;
> retransmission resource configuration information for the target internet of things device;
> security information, where the security information is used to perform authentication on the target internet of things device, and encrypt or decrypt transmitted data; and
> a first indication, where the first indication indicates backoff time for data retransmission of the target internet of things device.

In this embodiment of this application, the first device may perform access control, security transmission control, retransmission control, and the like on the internet of things device by using the first downlink message, reducing a quantity of signaling interactions.

Optionally, the identification information of the at least one internet of things device includes at least one of the following:

first identification information of the at least one internet of things device, where the first identification information is a unique identity of the internet of things device; and
second identification information, where the second identification information indicates at least two internet of things devices.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane;
transmitting data by using a user plane;
transmitting data in a random access procedure; and
transmitting data in a case in which a first condition is satisfied, where the first condition includes at least one of the following:

the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

Optionally, the method further includes:
the first device, a first uplink message sent by the target internet of things device.
The first uplink message includes at least one of the following:

a paging response;
an inventory result;
target service data; and
the security verification information.

Optionally, that the second indication indicates the target internet of things device to report the security verification information includes: the second indication indicates the target internet of things device to report the security verification information by using a response message, where the response message includes at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

Optionally, the method further includes:
the first device sends a second downlink message to the target internet of things device.
The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and
access resource configuration information.

Optionally, the first device includes at least one of the following:

a core network device;
an access network device;
a user terminal device; and
an electronic device with a read/write function.

In conclusion, this embodiment of this application provides the transmission method, to improve a signaling interaction process of an internet of things device, redefine interaction signaling of the internet of things device, and support more functions such as access control, security transmission control, and retransmission control in the signaling interaction. If the first device pages the internet of things device, with the transmission method provided in this application, contention-free access of a physical network device can be supported, reducing a quantity of signaling interactions.
The transmission method provided in embodiments of this application may be performed by a transmission apparatus. In embodiments of this application, a transmission apparatus provided in embodiments of this application is described by using an example in which the transmission method is performed by the transmission apparatus.
According to a third aspect, an embodiment of this application provides a transmission apparatus. FIG. 14 is a block diagram of a structure of the transmission apparatus according to an embodiment of this application. The apparatus may be used in an internet of things device. As shown in FIG. 14, the apparatus may specifically include:
a first downlink message receiving module 301, configured to receive a first downlink message sent by a first device, where the first downlink message indicates at least one internet of things device to initiate a random access procedure.
The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

Optionally, the identification information of the at least one internet of things device includes at least one of the following:

first identification information of the at least one internet of things device, where the first identification information is a unique identity of the internet of things device; and
second identification information, where the second identification information indicates at least two internet of things devices.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane;
transmitting data by using a user plane;
transmitting data in a random access procedure; and
transmitting data in a case in which a first condition is satisfied, where the first condition includes at least one of the following:

the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

Optionally, the apparatus further includes:
a first uplink message sending module, configured to send a first uplink message to the first device in response to the first downlink message.
The first uplink message includes at least one of the following:

a paging response;
an inventory result;
target service data; and

the security verification information.

Optionally, that the second indication indicates the target internet of things device to report the security verification information includes: the second indication indicates the target internet of things device to report the security verification information by using a response message, where the response message includes at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

Optionally, the time control information includes a count threshold of a counter and/or timing duration of a retransmission timer. After the target internet of things device sends the first uplink message, the counter performs counting each time an access occasion passes or the target internet of things device receives a downlink excitation signal.

Optionally, the apparatus further includes:
a second downlink message receiving module, configured to receive a second downlink message sent by the first device.

The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and
access resource configuration information.

Optionally, the apparatus further includes:
a data retransmission module, configured to perform data retransmission in a case in which a second condition is satisfied.

The second condition includes at least one of the following:

a value of the retransmission timer satisfies a timing condition;
the target internet of things device does not receive the second downlink message; and
the target internet of things device receives the second downlink message, and the second downlink message carries the seventh indication or the third indication.

Optionally, the apparatus further includes:
a resource determining module, configured to determine, based on first information, a random access resource for data sending or retransmission.

The first information includes at least one of the following:

the backoff time configured in the first downlink message; and
the access resource configuration information carried in the first downlink message.

Optionally, the target internet of things device includes a passive device or a backscatter transmission-based internet of things device. The first downlink message or the second downlink message carries second information, and the second information indicates an access occasion. The apparatus further includes:

an access occasion determining module, configured to determine a target access occasion based on the second information; and
a first transmission module, configured to perform uplink data transmission on the target access occasion.

Optionally, the second information includes at least one of the following:

the target access occasion; and
target backoff time.

Optionally, the first transmission module includes:

a counting submodule, configured to start a counter based on the target access occasion, where the counter is configured to control waiting duration; and

a transmission submodule, configured to perform uplink data transmission in a case in which a count value of the counter satisfies the waiting duration.

Optionally, the count value of the counter satisfies at least one of the following:

increasing or decreasing the count value of the counter by 1 each time an uplink transmission occasion passes; and increasing or decreasing the count value of the counter by 1 each time the target internet of things device receives a downlink command sent by the first device.

Optionally, in a case in which the target internet of things device supports backscatter transmission in a time division multiplexing mode in X slots each time, the transmission submodule includes:
a transmission unit, configured to perform uplink data transmission in a case in which the count value of the counter is equal to X, where X is an integer greater than 1.

Optionally, the target internet of things device includes an active device. The first downlink message or the second downlink message carries third information, and the third information indicates an uplink transmission occasion. The apparatus further includes:

a transmission occasion determining module, configured to determine the uplink transmission occasion based on the third information; and

a second transmission module, configured to perform uplink data transmission based on the uplink transmission occasion.

The third information includes at least one of the following:

waiting time;
an uplink transmission slot;
a time division multiplexing mode; and
an uplink transmission mode.

The transmission apparatus provided in this embodiment of this application can implement processes implemented in the method embodiment in FIG. 12, and achieve same technical effects. To avoid repeated description, details are not described herein again.

According to a fourth aspect, an embodiment of this application provides another transmission apparatus. FIG. 15 is a block diagram of a structure of the another transmission apparatus according to an embodiment of this application. The apparatus may be used in a first device. As shown in FIG. 15, the apparatus may specifically include:
a first downlink message sending module 401, configured to send a first downlink message to a target internet of things device, where the first downlink message indicates at least one internet of things device to initiate a random access procedure.

The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

Optionally, the identification information of the at least one internet of things device includes at least one of the following:

first identification information of the at least one internet of things device, where the first identification information is a unique identity of the internet of things device; and
second identification information, where the second identification information indicates at least two internet of things devices.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane;
transmitting data by using a user plane;
transmitting data in a random access procedure; and
transmitting data in a case in which a first condition is satisfied, where the first condition includes at least one of the following:

the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

Optionally, the method further includes:
the first device receives a first uplink message sent by the target internet of things device.
The first uplink message includes at least one of the following:

a paging response;
an inventory result;
target service data; and
the security verification information.

Optionally, that the second indication indicates the target internet of things device to report the security verification information includes: the second indication indicates the target internet of things device to report the security verification information by using a response message, where the response message includes at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

Optionally, the apparatus further includes:
a second downlink message sending module, configured to send a second downlink message to the target internet of things device.

The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and
access resource configuration information.

Optionally, the first device includes at least one of the following:

a core network device;
an access network device;
a user terminal device; and
an electronic device with a read/write function.

The transmission apparatus in this embodiment of this application may be an electronic device, for example, an electronic device having an operating system, or a component in an electronic device, such as an integrated circuit or a chip. The electronic device may be a terminal device. For example, the terminal device may include but is not limited to the type of the terminal device 11 listed above.

The transmission apparatus provided in this embodiment of this application can implement processes implemented in the method embodiment in FIG. 13, and achieve same technical effects. To avoid repeated description, details are not described herein again.

Optionally, as shown in FIG. 16, an embodiment of this application further provides a communication device 900, including a processor 901 and a memory 902. The memory 902 stores a program or instructions executable on the processor 901. For example, when the communication device 900 is a network side device, and the program or instructions are executed by the processor 901, the steps in the transmission method embodiment according to the first aspect are implemented, with same technical effects achieved. When the communication device 900 is a terminal device, and the program or the instructions are executed by the processor 901, the steps in the transmission method embodiment according to the second aspect are implemented, with same technical effects achieved. To avoid repetition, details are not described herein again.

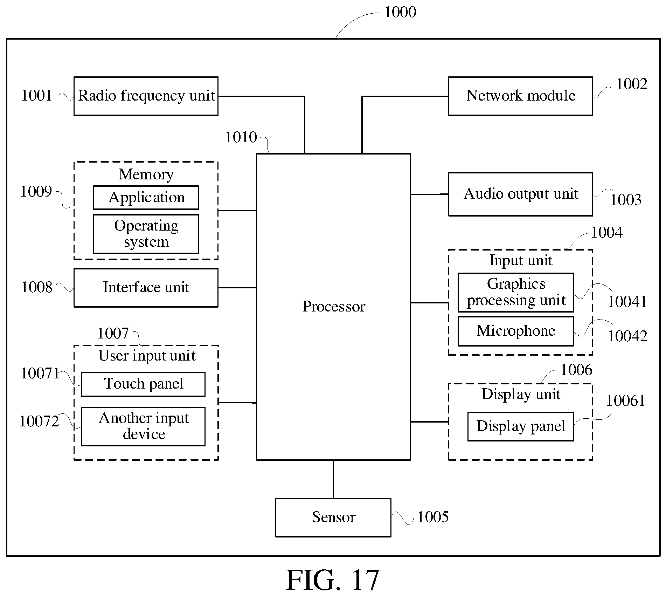

FIG. 17 is a diagram of a hardware structure of a terminal device implementing an embodiment of this application.

The terminal device 1000 includes but is not limited to at least a part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by a person skilled in the art that the terminal device 1000 may further include a power supply (for example, a battery) supplying power to the components. The power supply may be logically connected to the processor 1010 via a power management system, so that functions such as charge and discharge management and power consumption management are implemented via the power management system. The structure of the terminal device shown in FIG. 17 does not constitute a limitation on the terminal device. The terminal device may include more or fewer components than those shown, or combine some components, or have different component arrangements. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function button (for example, a volume control button or a power on/off button), a trackball, a mouse, and a joystick. Details are not described herein again.

In this embodiment of this application, after receiving downlink data from a network side device, the radio frequency unit 1001 may transmit the data to the processor 1010 for processing. In addition, the radio frequency unit 1001 may send uplink data to the network side device. Generally, the radio frequency unit 1001 includes but is not limited to an antenna, an amplifier, a transceiver, a coupler, a low noise amplifier, a duplexer, and the like.

The memory 1009 may be configured to store a software program or instructions and various data. The memory 1009 may mainly include a first storage region storing the program or the instructions and a data storage region storing the data. The first storage region may store an operating system, an application or instructions required for at least one function (for example, a sound play function and an image play function), and the like. In addition, the memory 1009 may include a volatile memory or a non-volatile memory. Alternatively, the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 1009 in this embodiment of this application includes but is not limited to these and any other suitable types of memories.

The processor 1010 may include one or more processing units. Optionally, the processor 1010 integrates an application processor and a modem processor. The application processor mainly processes operations related to the operating system, a user interface, an application, and the like. The modem processor mainly processes a wireless communication signal, and is, for example, a baseband processor. It may be understood that the modem processor may alternatively not be integrated into the processor 1010.

In an optional embodiment of this application, the terminal device is an internet of things device, and is configured to implement the steps in the transmission method embodiment according to the first aspect.

The radio frequency unit 1001 is configured to receive a first downlink message sent by a first device, where the first downlink message indicates at least one internet of things device to initiate a random access procedure.

The first downlink message includes at least one of the following:

identification information of the at least one internet of things device;
a paging cause;
access procedure information, where the access procedure information indicates a random access type to be used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

Optionally, the identification information of the at least one internet of things device includes at least one of the following:

first identification information of the at least one internet of things device, where the first identification information is a unique identity of the internet of things device; and

second identification information, where the second identification information indicates at least two internet of things devices.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane;
transmitting data by using a user plane;
transmitting data in a random access procedure; and
transmitting data in a case in which a first condition is satisfied, where the first condition includes at least one of the following:

the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

Optionally, the radio frequency unit 1001 is further configured to send a first uplink message to the first device in response to the first downlink message.
The first uplink message includes at least one of the following:

a paging response;
an inventory result;
target service data; and
the security verification information.

Optionally, that the second indication indicates the target internet of things device to report the security verification information includes: the second indication indicates the target internet of things device to report the security verification information by using a response message, where the response message includes at least one of the following:

the first uplink message;

a paging response message;
a response message used to report the inventory result;
a first message Msg1 in the random access procedure;
a third message Msg3 in the random access procedure; and
a fifth message Msg5 in the random access procedure.

Optionally, the time control information includes a count threshold of a counter and/or timing duration of a retransmission timer. After the target internet of things device sends the first uplink message, the counter performs counting each time an access occasion passes or the target internet of things device receives a downlink excitation signal.

Optionally, the radio frequency unit 1001 is further configured to receive a second downlink message sent by the first device.

The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and
access resource configuration information.

Optionally, the radio frequency unit 1001 is further configured to perform data retransmission in a case in which a second condition is satisfied.

The second condition includes at least one of the following:

a value of the retransmission timer satisfies a timing condition;
the target internet of things device does not receive the second downlink message; and
the target internet of things device receives the second downlink message, and the second downlink message carries the seventh indication or the third indication.

Optionally, the processor 1010 is configured to determine, based on first information, a random access resource for data sending or retransmission.

The first information includes at least one of the following:

the backoff time configured in the first downlink message; and
the access resource configuration information carried in the first downlink message.

Optionally, the target internet of things device includes a passive device or a backscatter transmission-based internet of things device. The first downlink message or the second downlink message carries second information, and the second information indicates an access occasion. The processor 1010 is further configured to determine a target access occasion based on the second information.

The radio frequency unit 1001 is configured to perform uplink data transmission on the target access occasion.

Optionally, the second information includes at least one of the following:

the target access occasion; and
target backoff time.

Optionally, the processor 1010 is specifically configured to start a counter based on the target access occasion, where the counter is configured to control waiting duration.

The radio frequency unit 1001 is specifically configured to perform uplink data transmission in a case in which a count value of the counter satisfies the waiting duration.

Optionally, the count value of the counter satisfies at least one of the following:

increasing or decreasing the count value of the counter by 1 each time an uplink transmission occasion passes; and
increasing or decreasing the count value of the counter by 1 each time the target internet of things device receives a downlink command sent by the first device.

Optionally, in a case in which the target internet of things device supports backscatter transmission in a time division multiplexing mode in X slots each time, the radio frequency unit 1001 is specifically configured to:
perform uplink data transmission in a case in which the count value of the counter is equal to X, where X is an integer greater than 1.

Optionally, the target internet of things device includes an active device. The first downlink message or the second downlink message carries third information, and the third information indicates an uplink transmission occasion. The processor 1010 is further configured to determine the uplink transmission occasion based on the third information.

The radio frequency unit 1001 is configured to perform uplink data transmission on the uplink transmission occasion.

The third information includes at least one of the following:

waiting time;
an uplink transmission slot;
a time division multiplexing mode; and
an uplink transmission mode.

In another optional embodiment of this application, the terminal device is a first device in this application, and is configured to implement the steps in the transmission method embodiment according to the second aspect.

The radio frequency unit 1001 is configured to send a first downlink message to a target internet of things device, where the first downlink message indicates the target internet of things device to initiate a random access procedure.

The first downlink message includes at least one of the following:

identification information of the at least one internet of things device;
a paging cause;
access procedure information, where the access procedure information indicates a random access type used by the target internet of things device;
data transmission information, where the data transmission information indicates a data transmission mode used by the target internet of things device;
access resource configuration information for the target internet of things device;
time control information, where the time control information indicates a retransmission occasion for the target internet of things device;
retransmission resource configuration information for the target internet of things device;
security information, where the security information is used to perform authentication on the target internet of things device, and encrypt or decrypt transmitted data; and
a first indication, where the first indication indicates backoff time for data retransmission of the target internet of things device.

Optionally, the identification information of the at least one internet of things device includes at least one of the following:

first identification information of the at least one internet of things device, where the first identification information is a unique identity of the internet of things device; and
second identification information, where the second identification information indicates at least two internet of things devices.

Optionally, in a case in which the first downlink message is a paging message, the paging cause includes at least one of the following:

inventory, representing that the first device inventories the target internet of things device; and
data read/write, representing that the first device performs data read/write on the target internet of things device.

Optionally, the random access type includes at least one of the following:

contention-based random access or four-step random access; and
contention-free random access or two-step random access.

Optionally, the data transmission mode includes at least one of the following:

transmitting data by using a control plane;
transmitting data by using a user plane;
transmitting data in a random access procedure; and
transmitting data in a case in which a first condition is satisfied, where the first condition includes at least one of the following:

the random access procedure of the target internet of things device is completed;
a process in which the first device inventories the target internet of things device is completed; and
the target internet of things device has established a security connection to the first device or the target internet of things device is configured with the security information.

Optionally, the retransmission resource configuration information or the access resource configuration information includes at least one of the following:

a time domain resource; and
a frequency domain resource.

Optionally, the security information includes at least one of the following:

a security algorithm;
a key;
an authentication indication, where the authentication indication indicates the target internet of things device to perform authentication on the first device, and/or indicates the first device to perform authentication on the target internet of things device; and
a second indication, where the second indication indicates the target internet of things device to report security verification information.

Optionally, the radio frequency unit 1001 is further configured to receive a first uplink message sent by the target internet of things device.
The first uplink message includes at least one of the following:

a paging response;
an inventory result;
target data; and
the security verification information.

Optionally, that the second indication indicates the target internet of things device to report the security verification information includes: the second indication indicates the target internet of things device to report the security verification information by using a response message, where the response message includes at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

Optionally, the radio frequency unit 1001 is further configured to send a second downlink message to the target internet of things device.
The second downlink message includes at least one of the following:

a third indication, where the third indication indicates a data transmission success or failure for the target internet of things device;
a fourth indication, where the fourth indication indicates that data transmission is completed;
a fifth indication, where the fifth indication indicates the target internet of things device to release a connection;
a sixth indication, where the sixth indication indicates the target internet of things device to send new data;
a seventh indication, where the seventh indication indicates the target internet of things device to retransmit data;
retransmission resource configuration information; and

access resource configuration information.

Optionally, the first device includes at least one of the following:

a core network device;
an access network device;
a user terminal device; and
an electronic device with a read/write function.

An embodiment of this application further provides a network side device, including a processor and a communication interface. The communication interface is coupled to the processor. The processor is configured to run a program or instructions, to implement the steps in the method embodiment shown in FIG. 13. The network side device embodiment corresponds to the method embodiment for the network side device, and all the implementation processes and implementations in the method embodiment are applicable to the network side device embodiment, with same technical effects achieved.

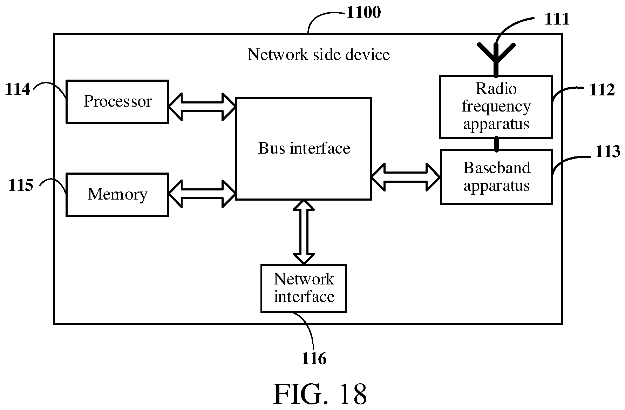

Specifically, an embodiment of this application further provides a network side device. As shown in FIG. 18, the network side device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information via the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out via the antenna 111.

The method performed by the network side device in the foregoing embodiment may be implemented in the baseband apparatus 113, and the baseband apparatus 113 includes a baseband processor.

The baseband apparatus 113 may include, for example, at least one baseband board. A plurality of chips are disposed on the baseband board. As shown in FIG. 18, one of the chips is, for example, the baseband processor, and is connected to the memory 115 through a bus interface, to invoke a program in the memory 115 to perform an operation of a network device shown in the foregoing method embodiment.

The network side device may further include a network interface 116. The interface is, for example, a common public radio interface (common public radio interface, CPRI).

Specifically, the network side device 1100 in this embodiment of the present invention further includes instructions or a program stored in the memory 115 and executable on the processor 114. The processor 114 invokes the instructions or the program in the memory 115 to perform the method performed by the modules shown in FIG. 15, with same technical effects achieved. To avoid repetition, details are not described herein again.

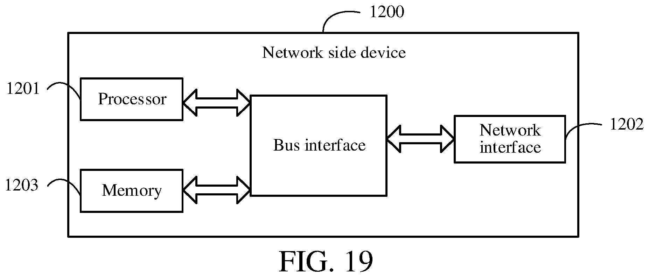

An embodiment of this application further provides a network side device. As shown in FIG. 19, the network side device 1200 includes a processor 1201, a network interface 1202, and a memory 1203. The network interface 1202 is, for example, a common public radio interface (a common public radio interface, CPRI).

Specifically, the network side device 1200 in this embodiment of the present invention further includes instructions or a program stored in the memory 1203 and executable on the processor 1201. The processor 1201 invokes the instructions or the program in the memory 1203 to perform the method performed by the modules shown in FIG. 15, with same technical effects achieved. To avoid repetition, details are not described herein again.

An embodiment of this application further provides a readable storage medium. The readable storage medium stores a program or instructions. When the program or the instructions are executed by a processor, the processes in the foregoing transmission method embodiment are implemented, with same technical effects achieved. To avoid repetition, details are not described herein again.

The processor is the processor in the terminal device described in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing transmission method embodiment, with same technical effects achieved. To avoid repetition, details are not described herein again.

It should be understood that the chip in embodiments of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing transmission method embodiment, with same technical effects achieved. To avoid repetition, details are not described herein again.

An embodiment of this application further provides a transmission system, including a terminal and a network side device. The terminal may be configured to perform the steps of the transmission method according to the second aspect. The network side device may be configured to perform the steps of the transmission method according to the first aspect.

It should be noted that in this specification, the terms "include" and "comprise" or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "including a/an..." does not preclude existence of other identical elements in the process, method, article, or apparatus that includes the element. In addition, it should be noted that the scope of the methods and apparatuses in embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing implementations, a person skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially, or the part contributing to the conventional technology may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in embodiments of this application.

The foregoing describes embodiments of this application with reference to the accompanying drawings. However, this application is not limited to these specific embodiments. The specific embodiments are merely illustrative rather than restrictive. Inspired by this application, a person of ordinary skill in the art may develop many other manners without departing from the principle of this application and the protection scope of the claims, and all such manners fall within the protection scope of this application.

## Claims

1. A transmission method, wherein the method comprises:

   receiving, by a target internet of things device, a first downlink message sent by a first device, wherein the first downlink message indicates at least one internet of things device to initiate a random access procedure; and the first downlink message comprises at least one of the following:

   identification information of the at least one internet of things device;
   a paging cause;
   access procedure information, wherein the access procedure information indicates a random access type to be used by the target internet of things device;
   data transmission information, wherein the data transmission information indicates a data transmission mode used by the target internet of things device;
   access resource configuration information for the target internet of things device;
   time control information, wherein the time control information indicates a retransmission occasion for the target internet of things device;
   retransmission resource configuration information for the target internet of things device;
   security information, wherein the security information is used to perform authentication on the target internet of things device, and encrypt or decrypt transmitted data; and
   a first indication, wherein the first indication indicates backoff time for data retransmission of the target internet of things device.

2. The method according to claim 1, wherein the identification information of the at least one internet of things device comprises at least one of the following:

   first identification information of the at least one internet of things device, wherein the first identification information is a unique identity of the internet of things device; and

second identification information, wherein the second identification information indicates at least two internet of things devices.

3. The method according to claim 1, wherein in a case in which the first downlink message is a paging message, the paging cause comprises at least one of the following:

inventory, representing that the first device inventories the target internet of things device; and
data read/write, representing that the first device performs data read/write on the target internet of things device.

4. The method according to claim 1, wherein the random access type comprises at least one of the following:

contention-based random access or four-step random access; and
contention-free random access or two-step random access.

5. The method according to claim 1, wherein the data transmission mode comprises at least one of the following:

transmitting data by using a control plane;
transmitting data by using a user plane;
transmitting data in a random access procedure; and
transmitting data in a case in which a first condition is satisfied, wherein the first condition comprises at least one of the following:

the random access procedure of the target internet of things device is completed;
a process in which the first device inventories the target internet of things device is completed; and
the target internet of things device has established a security connection to the first device or the target internet of things device is configured with the security information.

6. The method according to claim 1, wherein the retransmission resource configuration information or the access resource configuration information comprises at least one of the following:

a time domain resource; and
a frequency domain resource.

7. The method according to claim 1 or 5, wherein the security information comprises at least one of the following:

a security algorithm;
a key;
an authentication indication, wherein the authentication indication indicates the target internet of things device to perform authentication on the first device, and/or indicates the first device to perform authentication on the target internet of things device; and
a second indication, wherein the second indication indicates the target internet of things device to report security verification information.

8. The method according to claim 7, wherein the method further comprises:

sending, by the target internet of things device, a first uplink message to the first device in response to the first downlink message, wherein
the first uplink message comprises at least one of the following:

a paging response;
an inventory result;
target service data; and
the security verification information.

9. The method according to claim 8, wherein that the second indication indicates the target internet of things device to report the security verification information comprises: the second indication indicates the target internet of things device to report the security verification information by using a response message, wherein the response message comprises at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

10. The method according to claim 8, wherein the time control information comprises a count threshold of a counter and/or timing duration of a retransmission timer; and after the target internet of things device sends the first uplink message, the counter performs counting each time an access occasion passes or the target internet of things device receives a downlink excitation signal.

11. The method according to claim 1, wherein the method further comprises:

receiving, by the target internet of things device, a second downlink message sent by the first device, wherein the second downlink message comprises at least one of the following:

a third indication, wherein the third indication indicates a data transmission success or failure for the target internet of things device;
a fourth indication, wherein the fourth indication indicates that data transmission is completed;
a fifth indication, wherein the fifth indication indicates the target internet of things device to release a connection;
a sixth indication, wherein the sixth indication indicates the target internet of things device to send new data;
a seventh indication, wherein the seventh indication indicates the target internet of things device to retransmit data;
retransmission resource configuration information; and
access resource configuration information.

12. The method according to claim 11, wherein the method further comprises:

performing, by the target internet of things device, data retransmission in a case in which a second condition is satisfied, wherein
the second condition comprises at least one of the following:

a value of a retransmission timer satisfies a timing condition;
the target internet of things device does not receive the second downlink message; and
the target internet of things device receives the second downlink message, and the second downlink message carries the seventh indication or the third indication.

13. The method according to any one of claims 1 to 12, wherein the method further comprises:

determining, by the target internet of things device based on first information, a random access resource for data sending or retransmission, wherein
the first information comprises at least one of the following:

the backoff time configured in the first downlink message; and
the access resource configuration information carried in the first downlink message.

14. The method according to claim 11, wherein the target internet of things device comprises a passive device or a backscatter transmission-based internet of things device; the first downlink message or the second downlink message carries second information, and the second information indicates an access occasion; and the method further comprises:

determining, by the target internet of things device, a target access occasion based on the second information; and
performing, by the target internet of things device, uplink data transmission on the target access occasion.

15. The method according to claim 14, wherein the second information comprises at least one of the following:

the target access occasion; and
target backoff time.

16. The method according to claim 14, wherein performing, by the target internet of things device, uplink data transmission on the target access occasion comprises:

starting, by the target internet of things device, a counter based on the target access occasion, wherein the counter is configured to control waiting duration; and
performing, by the target internet of things device, uplink data transmission in a case in which a count value of the counter satisfies the waiting duration.

17. The method according to claim 16, wherein the count value of the counter satisfies at least one of the following:

increasing or decreasing the count value of the counter by 1 each time an uplink transmission occasion passes; and
increasing or decreasing the count value of the counter by 1 each time the target internet of things device receives a downlink command sent by the first device.

18. The method according to claim 16, wherein in a case in which the target internet of things device supports backscatter transmission in a time division multiplexing mode in X slots each time, performing, by the target internet of things device, uplink data transmission in the case in which the count value of the counter satisfies the waiting duration comprises:
performing, by the target internet of things device, uplink data transmission in a case in which the count value of the counter is equal to X, wherein X is an integer greater than 1.

19. The method according to claim 11, wherein the target internet of things device comprises an active device; the first downlink message or the second downlink message carries third information, and the third information indicates an uplink transmission occasion; and the method further comprises:

determining, by the target internet of things device, the uplink transmission occasion based on the third information; and
performing, by the target internet of things device, uplink data transmission based on the uplink transmission occasion, wherein
the third information comprises at least one of the following:

waiting time;
an uplink transmission slot;
a time division multiplexing mode; and
an uplink transmission mode.

20. A transmission method, wherein the method comprises:

sending, by a first device, a first downlink message to a target internet of things device, wherein the first downlink message indicates at least one internet of things device to initiate a random access procedure; and
the first downlink message comprises at least one of the following:

identification information of the at least one internet of things device;
a paging cause;
access procedure information, wherein the access procedure information indicates a random access type to be used by the target internet of things device;
data transmission information, wherein the data transmission information indicates a data transmission mode used by the target internet of things device;
access resource configuration information for the target internet of things device;
time control information, wherein the time control information indicates a retransmission occasion for the target internet of things device;
retransmission resource configuration information for the target internet of things device;
security information, wherein the security information is used to perform authentication on the target internet of things device, and encrypt or decrypt transmitted data; and

a first indication, wherein the first indication indicates backoff time for data retransmission of the target internet of things device.

21. The method according to claim 20, wherein the identification information of the at least one internet of things device comprises at least one of the following:

first identification information of the at least one internet of things device, wherein the first identification information is a unique identity of the internet of things device; and
second identification information, wherein the second identification information indicates at least two internet of things devices.

22. The method according to claim 20, wherein in a case in which the first downlink message is a paging message, the paging cause comprises at least one of the following:

inventory, representing that the first device inventories the target internet of things device; and
data read/write, representing that the first device performs data read/write on the target internet of things device.

23. The method according to claim 20, wherein the random access type comprises at least one of the following:

contention-based random access or four-step random access; and
contention-free random access or two-step random access.

24. The method according to claim 20, wherein the data transmission mode comprises at least one of the following:

transmitting data by using a control plane;
transmitting data by using a user plane;
transmitting data in a random access procedure; and
transmitting data in a case in which a first condition is satisfied, wherein the first condition comprises at least one of the following:

the random access procedure of the target internet of things device is completed;
a process in which the first device inventories the target internet of things device is completed; and
the target internet of things device has established a security connection to the first device or the target internet of things device is configured with the security information.

25. The method according to claim 20, wherein the retransmission resource configuration information or the access resource configuration information comprises at least one of the following:

a time domain resource; and
a frequency domain resource.

26. The method according to claim 20 or 24, wherein the security information comprises at least one of the following:

a security algorithm;
a key;
an authentication indication, wherein the authentication indication indicates the target internet of things device to perform authentication on the first device, and/or indicates the first device to perform authentication on the target internet of things device; and
a second indication, wherein the second indication indicates the target internet of things device to report security verification information.

27. The method according to claim 26, wherein the method further comprises:

receiving, by the first device, a first uplink message sent by the target internet of things device, wherein the first uplink message comprises at least one of the following:

a paging response;
an inventory result;

target service data; and
the security verification information.

28. The method according to claim 27, wherein that the second indication indicates the target internet of things device to report the security verification information comprises: the second indication indicates the target internet of things device to report the security verification information by using a response message, wherein the response message comprises at least one of the following:

the first uplink message;
a paging response message;
a response message used to report the inventory result;
a first message Msg1 in the random access procedure;
a third message Msg3 in the random access procedure; and
a fifth message Msg5 in the random access procedure.

29. The method according to claim 20, wherein the method further comprises:

sending, by the first device, a second downlink message to the target internet of things device, wherein the second downlink message comprises at least one of the following:

a third indication, wherein the third indication indicates a data transmission success or failure for the target internet of things device;
a fourth indication, wherein the fourth indication indicates that data transmission is completed;
a fifth indication, wherein the fifth indication indicates the target internet of things device to release a connection;
a sixth indication, wherein the sixth indication indicates the target internet of things device to send new data;
a seventh indication, wherein the seventh indication indicates the target internet of things device to retransmit data;
retransmission resource configuration information; and
access resource configuration information.

30. The method according to any one of claims 20 to 29, wherein the first device comprises at least one of the following:

a core network device;
an access network device;
a user terminal device; and
an electronic device with a read/write function.

31. A transmission apparatus, used in an internet of things device, wherein the apparatus comprises:

a first downlink message receiving module, configured to receive a first downlink message sent by a first device, wherein the first downlink message indicates at least one internet of things device to initiate a random access procedure; and
the first downlink message comprises at least one of the following:

identification information of the at least one internet of things device;
a paging cause;
access procedure information, wherein the access procedure information indicates a random access type to be used by the target internet of things device;
data transmission information, wherein the data transmission information indicates a data transmission mode used by the target internet of things device;
access resource configuration information for the target internet of things device;
time control information, wherein the time control information indicates a retransmission occasion for the target internet of things device;
retransmission resource configuration information for the target internet of things device;
security information, wherein the security information is used to perform authentication on the target internet of things device, and encrypt or decrypt transmitted data; and
a first indication, wherein the first indication indicates backoff time for data retransmission of the target internet of things device.

32. A transmission apparatus, used in a first device, wherein the apparatus comprises:

a first downlink message sending module, configured to send a first downlink message to a target internet of things device, wherein the first downlink message indicates at least one internet of things device to initiate a random access procedure; and
the first downlink message comprises at least one of the following:

identification information of the at least one internet of things device;
a paging cause;
access procedure information, wherein the access procedure information indicates a random access type to be used by the target internet of things device;
data transmission information, wherein the data transmission information indicates a data transmission mode used by the target internet of things device;
access resource configuration information for the target internet of things device;
time control information, wherein the time control information indicates a retransmission occasion for the target internet of things device;
retransmission resource configuration information for the target internet of things device;
security information, wherein the security information is used to perform authentication on the target internet of things device, and encrypt or decrypt transmitted data; and
a first indication, wherein the first indication indicates backoff time for data retransmission of the target internet of things device.

33. An internet of things device, comprising a processor and a memory, wherein the memory stores a program or instructions executable on the processor, and when the program or the instructions are executed by the processor, the steps of the transmission method according to any one of claims 1 to 19 are implemented.

34. An electronic device, comprising a processor and a memory, wherein the memory stores a program or instructions executable on the processor, and when the program or the instructions are executed by the processor, the steps of the transmission method according to any one of claims 20 to 30 are implemented.

35. A readable storage medium, wherein the readable storage medium stores a program or instructions, and when the program or instructions are executed by a processor, the transmission method according to any one of claims 1 to 19 or the steps of the transmission method according to any one of claims 20 to 30 are implemented.

36. A chip, wherein the chip comprises a processor and a communication interface, the communication interface is coupled to the processor, and the processor is configured to run a program or instructions, to implement the transmission method according to any one of claims 1 to 19 or the steps of the transmission method according to any one of claims 20 to 30.

37. A computer program product, wherein the program product is executed by at least one processor to implement the transmission method according to any one of claims 1 to 19 or the steps of the transmission method according to any one of claims 20 to 30.

FIG. 1

Two links:
link 1: the read/write device to the tag device
link 2: the tag device to the read/write device

FIG. 2

FIG. 3

FIG. 4

Read/write device

| Select |
| Inventory |
| Interact |

Tag device

| Status |
| Ready |
| Arbitrate |
| Reply |
| Acknowledge |
| Open |
| Secure |
| Killed |

## FIG. 5

UE                eNB

① Random access preamble →

← Random access response ②

③ Scheduled transmission →

← Conotention resolution ④

## FIG. 6

UE                eNB

⓪ ← Random access preamble allocation

Random access preamble → ①

② ← Random access response

## FIG. 7

Steps of two-step random access

FIG. 8

Steps of two-step random access/fallback

FIG. 9

FIG. 10

UE

gNB

Step 0: Two-step random access configuration

Step 1 (MsgA): Data + UE-ID

Step 2 (MsgB): ACK

U-ID + ACK indication

## FIG. 11

A target internet of things device receives a first downlink message sent by a first device, where the first downlink message indicates at least one internet of things device to initiate a random access procedure ⟋— 101

## FIG. 12

A first device sends a first downlink message to a target internet of things device, where the first downlink message indicates at least one internet of things device to initiate a random access procedure ⟋— 201

## FIG. 13

First downlink message receiving module ⟋— 301

## FIG. 14

First downlink message sending module ⟋— 401

## FIG. 15

⟋— 900

Communication device

901 ⟋ Processor ⟷ Memory ⟍902

## FIG. 16

FIG. 17

1100

111

Network side device

114 Processor

112 Radio frequency apparatus

Bus interface

113 Baseband apparatus

115 Memory

Network interface

116

FIG. 18

1200

Network side device

1201

Processor

Bus interface

Network interface 1202

1203

Memory

FIG. 19

## INTERNATIONAL SEARCH REPORT

| International application No. |
|---|
| **PCT/CN2024/121064** |

**A.    CLASSIFICATION OF SUBJECT MATTER**

H04W74/00(2009.01)i

According to International Patent Classification (IPC) or to both national classification and IPC

**B.    FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS, CNTXT, ENTXTC, 3GPP, VEN: 环境物联网, 随机接入, 寻呼, 重传, 鉴权, 退避, 盘点, 竞争, Ambient IoT, rach, paging, retransmission, authenticate, backoff, check, contention

**C.    DOCUMENTS CONSIDERED TO BE RELEVANT**

| Category* | Citation of document, with indication, where appropriate, of the relevant passages | Relevant to claim No. |
|---|---|---|
| PX | WO 2024187372 A1 (BEJING XIAOMI MOBILE SOFTWARE CO., LTD.) 19 September 2024 (2024-09-19) description, paragraphs 5-307 | 1-4, 6, 10-23, 25, 29-37 |
| X | WO 2022169732 A1 (IDAC HOLDINGS, INC.) 11 August 2022 (2022-08-11) description, paragraphs 31-375 | 1, 4, 6, 10-20, 23, 25, 29-37 |
| X | WO 2023116735 A1 (HUAWEI TECHNOLOGIES CO., LTD.) 29 June 2023 (2023-06-29) description, paragraphs 6-422 | 1-3, 10-22, 25, 29-37 |
| A | WO 2023143244 A1 (HUAWEI TECHNOLOGIES CO., LTD.) 03 August 2023 (2023-08-03) entire document | 1-37 |
| A | US 2020351816 A1 (TELEFONAKTIEBOLAGET LM ERICSSON (PUBL)) 05 November 2020 (2020-11-05) entire document | 1-37 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2024** | **03 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/121064** |

| Patent document cited in search report | | | Publication date (day/month/year) | Patent family member(s) | | | Publication date (day/month/year) |
| --- | --- | --- | --- | --- | --- | --- | --- |
| WO | 2024187372 | A1 | 19 September 2024 | None | | | |
| WO | 2022169732 | A1 | 11 August 2022 | KR | 20230136664 | A | 26 September 2023 |
| | | | | US | 2024215067 | A1 | 27 June 2024 |
| | | | | EP | 4289216 | A1 | 13 December 2023 |
| | | | | BR | 112023015762 | A2 | 07 November 2023 |
| | | | | CN | 117063597 | A | 14 November 2023 |
| | | | | IN | 202317050497 | A | 08 December 2023 |
| | | | | VN | 100467 | A | 25 January 2024 |
| WO | 2023116735 | A1 | 29 June 2023 | US | 2024338540 | A1 | 10 October 2024 |
| | | | | EP | 4443921 | A1 | 09 October 2024 |
| | | | | CN | 116321083 | A | 23 June 2023 |
| WO | 2023143244 | A1 | 03 August 2023 | CN | 116567780 | A | 08 August 2023 |
| US | 2020351816 | A1 | 05 November 2020 | WO | 2019097473 | A1 | 23 May 2019 |
| | | | | EP | 3711395 | A1 | 23 September 2020 |
| | | | | EP | 3711395 | B1 | 14 September 2022 |
| | | | | US | 11147037 | B2 | 12 October 2021 |

Form PCT/ISA/210 (patent family annex) (July 2022)

**REFERENCES CITED IN THE DESCRIPTION**

**Patent documents cited in the description**

- CN 202311290603